# EUROPEAN PATENT APPLICATION

(11) **EP 4 628 413 A1**
(43) Date of publication of application: **08.10.2025**
(21) Application number: 25164932.3
(22) Date of filing: 20.03.2025
(51) Int. Cl.: B65B 27/06, B65B 41/12, B65B 59/04, B65H 21/00, B65H 54/62, B29C 48/09, B29C 48/28

(54) **WRAPPER MACHINE FOR PACKAGING FLEXIBLE ARTICLES WITH AN ELONGATED SHAPE, IN PARTICULAR FLEXIBLE PIPES**

(30) Priority: 22.03.2024 IT 202400006451
(71) Applicant: SICA S.P.A., 48011 Alfonsine (Ravenna) (IT)
(72) Inventor: SECCHIARI, Marco, 48011 ALFONSINE (RA) (IT); DE VITA, Maurizio, 48011 ALFONSINE (RA) (IT); VECCHI, Giovanni, 48011 ALFONSINE (RA) (IT); GASPERONI, Andrea, 48011 ALFONSINE (RA) (IT)
(74) Representative: Studio Torta S.p.A.

(57) **Abstract**

A wrapper machine has a coiling station (5) for forming a coil (6) of a flexible article (2) with an elongated shape, a packaging station (7) for wrapping a stretch film (3) around the coil (6) of flexible article, a transfer unit (10) for transferring the coil (6) of flexible article from the coiling station (5) to the packaging station (7), where the coil (6) of flexible article is rotated intermittently to be wrapped in a stretch film (3), and a roll-replacement unit (58) to replace a roll (54) of stretch film mounted in the packaging station (7).

## Description

### CROSS-REFERENCE TO RELATED APPLICATIONS

This patent application claims priority from Italian patent application no. 102024000006451 filed on March 22, 2024, the entire disclosure of which is incorporated herein by reference.

### TECHNICAL FIELD

This invention relates to a wrapper machine for packaging flexible articles with an elongated shape, in particular flexible pipes.

This invention finds particularly advantageous application in the packaging of flexible pipes in stretch film made of plastic, to which the following discussion will make explicit reference without any loss of generality thereby.

### BACKGROUND

In the field of packaging flexible pipes in plastic stretch film, it is known to make a wrapper machine of the type comprising a coiling station to form a coil of flexible pipe; a feeding unit to feed a continuous bar of flexible pipe to the coiling station; a cutting unit to separate the coil from the continuous bar; a packaging station for wrapping a stretch film around the coil; and a transfer unit for transferring the coil from the coiling station to the packaging station in a forward direction transverse to a longitudinal axis of the coil.

The packaging station comprises a wrapper assembly mounted to rotate continuously around a first axis of rotation parallel to the forward direction and wrap the stretch film around the coil, and a rotary clamp configured to rotate the coil intermittently around a second axis of rotation transverse to the first axis of rotation.

The rotary clamp is equipped with a pair of gripper jaws and a drive device to move the gripper jaws around the second axis of rotation.

Each gripper jaw comprises an outer plate connected with the drive device to move around the second axis of rotation, and an inner plate movable, in relation to the outer plate, parallel to the second axis of rotation between a coil clamping position and a coil release position.

The drive device comprises, for each gripper jaw, a respective actuating cylinder with an output rod connected to the outer plate of the gripper jaw.

Since the stretch film is unwound from a stretch film coil mounted on the wrapper assembly, known wrapper machines of the type described above have certain drawbacks, mainly arising from the fact that the replacement of the stretch film coil is carried out manually by the operating personnel, requires a relatively long and complex operating sequence, and results in stoppage and, therefore, relatively reduced productivity of such wrapper machines.

### SUMMARY

The object of this invention is to provide a wrapper machine for packaging flexible articles with an elongated shape, in particular flexible pipes, that is free from the drawbacks described above.

According to this invention, a wrapper machine for packaging flexible articles with an elongated shape, in particular flexible pipes, is provided according to what is claimed in the attached claims.

### BRIEF DESCRIPTION OF THE DRAWINGS

This invention will now be described with reference to the attached drawings that illustrate a non-limiting embodiment thereof, in which:
Figure 1 is a schematic perspective view, with parts removed for clarity, of a preferred embodiment of the wrapper machine of this invention;
Figures 2 and 3 are two schematic side views, with parts removed for clarity, of the wrapper machine in Figure 1;
Figure 4 is a schematic perspective view, with parts removed for clarity, of a detail of the wrapper machine in Figures 1, 2, and 3;
Figure 5 is a schematic perspective view, with parts removed for clarity, of a detail in Figure 4;
Figure 6 is a schematic perspective view, with parts removed for clarity, of a variant of the detail in Figures 4 and 5;
Figure 7 is a schematic perspective view, with parts removed for clarity, of Figure 6; and
Figure 8a - 8d is a schematic side view, with parts removed for clarity, of the detail in Figure 6 shown in four different operating positions.

### DESCRIPTION OF EMBODIMENTS

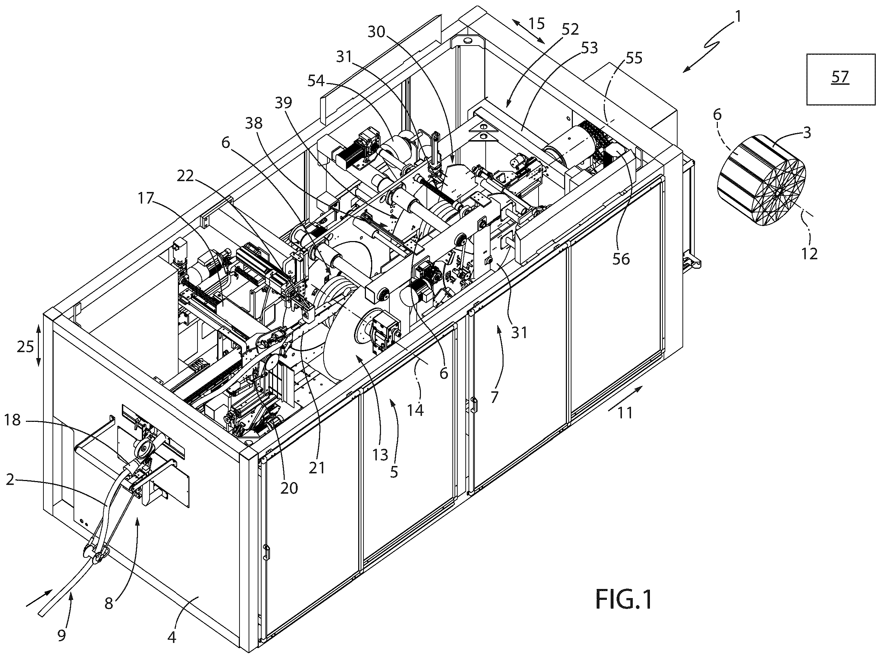

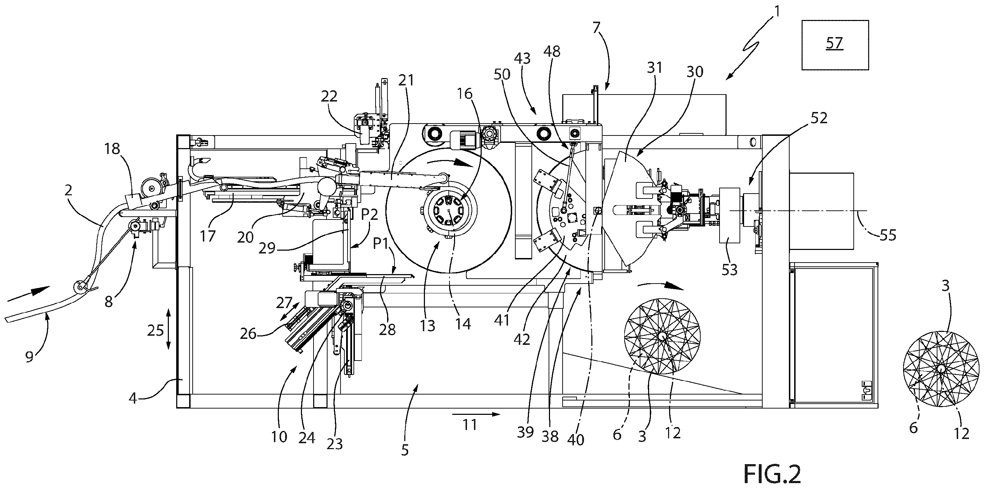

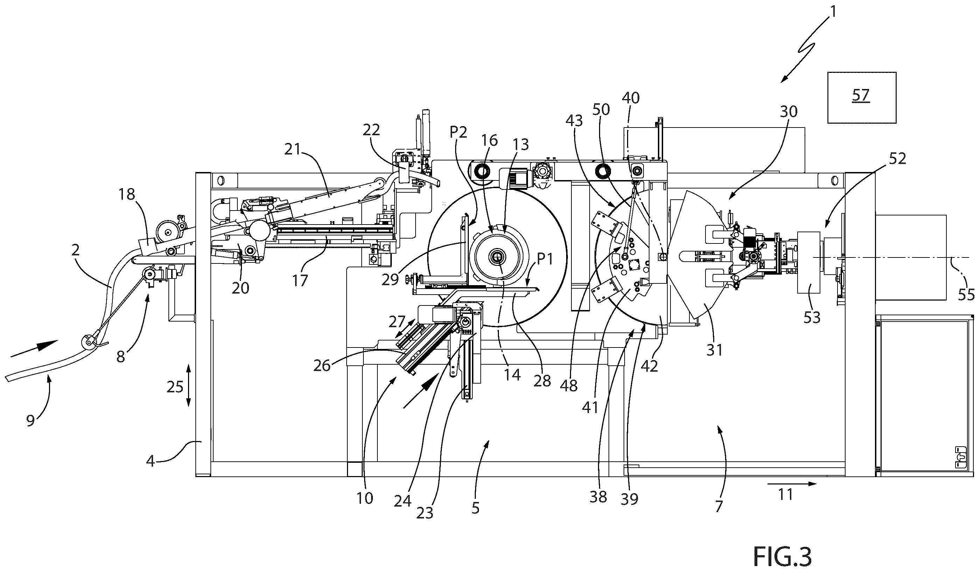

With reference to Figures 1, 2, and 3, reference number 1 denotes, as a whole, a wrapper machine for packaging flexible pipes 2 in a stretch film 3 made of plastic.

The machine 1 comprises an elongated base 4; a coiling station 5 of a known type for forming a coil 6 of pipe 2; a packaging station 7 for wrapping the film 3 around the coil 6; a feeding unit 8 of a known type for feeding a continuous bar 9 of pipe 2 from an extrusion unit (not shown) to the station 5; and a transfer unit 10 for transferring the coil 6 from one station 5 to the other station 7 in a horizontal advancement direction 11 transverse to a longitudinal axis 12 of the coil 6.

The station 5 is equipped with a wrapper roller 13 of a known type, which is mounted to rotate about its own longitudinal axis 14 parallel to a horizontal direction 15 transverse to the direction 11, and is also mounted to make straight movements in the direction 15 between a forward position for forming the coil 6 and a withdrawn position disengaged from the coil 6.

The roller 13 is bounded by an outer wall 16, which extends around the axis 14, and is defined by multiple flat or cylindrical support sectors (not shown) movable transversely to the axis 14 between an expanded position for forming the coil 6 and a contracted position disengaged from the coil 6**.**

The feeding unit 8 comprises a first horizontal slide 17, which is slidably coupled to the base 4 to perform, with respect to the base 4, straight movements in the direction 15, and supports an inlet cone 18 configured to receive the bar 9 of pipe 2.

The unit 8 also comprises a second horizontal slide 20, which is slidably coupled to the slide 17 to perform, with respect to the slide 17, straight movements parallel to the direction 11, and supports an elongated guide arm 21, which protrudes from the slide 20 in the direction 11 to release the pipe 2 on the roller 13.

The slide 17 also supports a cutting device 22 configured to separate the coil 6 from the bar 9 at the end of the coil 6 formation cycle on the roller 13.

The unit 8 is moved by the slide 17 in the direction 15 so that the pipe 2 is correctly and evenly distributed along the axis 14 and, then, onto the roller 13.

The transfer unit 10 comprises a horizontal slide 23 coupled to the base 4 for performing, with respect to the base 4 itself, straight movements in the direction 11 between the stations 5 and 7, a vertical slide 24 coupled to the slide 23 for performing, with respect to the slide 23 itself, straight movements in a vertical direction 25 orthogonal to the directions 11 and 15, and an inclined slide 26 coupled to the slide 24 to perform, with respect to the slide 24 itself, straight movements in a direction 27 inclined with respect to the directions 11 and 25.

The slide 24 supports a lower bracket 28 defining a substantially horizontal support plane P1 for the coil 6, and a rear plate 29, which defines a substantially vertical support plane P2 for the coil 6, extends perpendicularly to the direction 11, and is slidably coupled to the slide 26 to perform, with respect to the bracket 28 and during a set-up phase of the transfer unit 10, straight movements in the direction 11 according to a diameter of the coil 6.

Preferably, but not necessarily, the plate 29 is moved along the slide 26 in the direction 11 by a drive device (not shown) comprising an electric motor with an output shaft connected to the plate 29.

At the packaging station 7, the coil 6 is advanced and released by the transfer unit 10 inside a containment channel 30 limited by two side walls 31 parallel to each other, each having the shape of a circular sector perpendicular to the direction 15, and also having a width less than 180°.

The channel 30 is movable in the direction 11 under the thrust of a known actuating cylinder, which is not shown, between a forward and a withdrawn position, and co-operates with an end-stroke bar 32, which is mounted between the walls 31 parallel to the direction 15, and is slidably coupled to the walls 31 to perform, with respect to the walls 31, straight movements parallel to the direction 11.

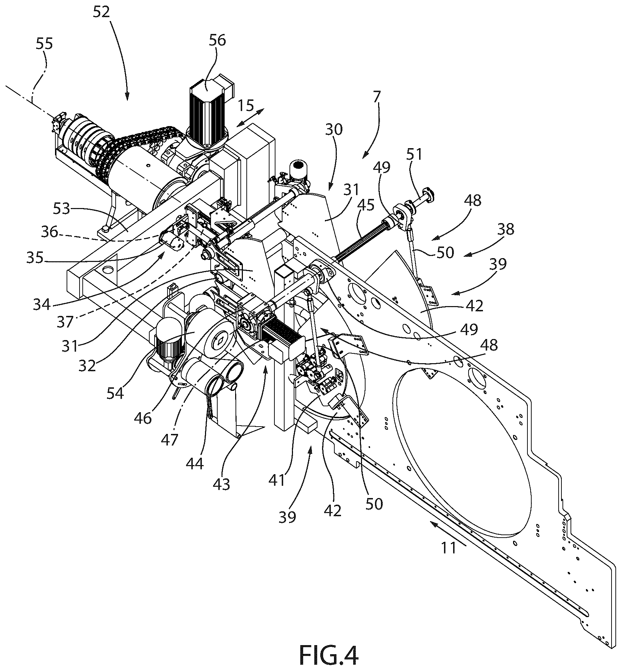

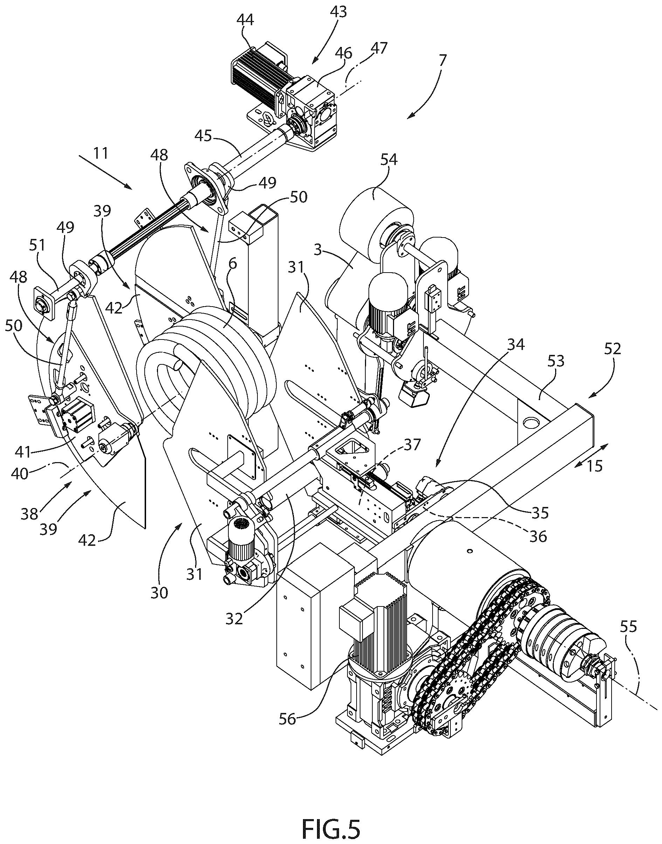

As shown in Figures 4 and 5, during a set-up phase of the packaging station 7, the position of the bar 32 with respect to the walls 31 is selectively controlled according to the diameter of the coil 6 by a drive device 34 comprising an electric motor 35, an output shaft of which is coupled via a belt transmission 36 with a screw 37, which extends parallel to the direction 11, and is coupled to the bar 32 via a screw-leadscrew coupling.

The channel 30 is aligned with a rotary clamp 38, which is mounted upstream of the channel 30 in the direction 11, and comprises two gripper jaws 39 mounted to rotate alternatively around an axis 40 of rotation parallel to direction 15.

Each jaw 39 has the shape of a circular sector perpendicular to the direction 15 and, in addition, a width of less than 180°. Each jaw 39 also comprises an outer plate 41 mounted to rotate about the axis 40 and an inner plate 42 coupled to the plate 41 in an angularly fixed manner to rotate about the axis 40 and in a slidable manner to make, with respect to the plate 41, straight movements in the direction 15 between a coil clamping position and a coil release position.

The jaws 39 are moved around the axis 40 by a drive device 43 comprising an electric motor 44 connected to a transmission shaft 45 via the interposition of a gear reducer 46.

The shaft 45 is mounted to rotate alternatively about its own longitudinal axis 47 parallel to the direction 15, and is connected with the plate 41 of each jaw 39 via a related crank mechanism 48.

Each crank mechanism 48 comprises a crank 49 coupled, in an angularly fixed way, to the shaft 45 and a connecting rod 50 rotatably coupled on one side to the crank 49 and on the other side to the plate 41 of the corresponding jaw 39.

The shaft 45 has at least one telescopic section 51 axially movable along the axis 47 to allow the distance between the jaws 39 to be selectively varied, when setting up the clamp 38, according to a width of the coil 6 measured parallel to the direction 15.

The packaging station 7 is further provided with a wrapper assembly 52 of a known type comprising a rotating arm 53, which has an L-shape, supports at least one coil 54 of film 3, and is mounted to rotate continuously about an axis 55 of rotation parallel to the direction 11 under the thrust of an electric motor 56.

When the containment channel 30 is placed in its withdrawn position, the arm 53 is moved by the motor 56 around the axis 55 to wrap the film 3 around the coil 6.

The wrapper machine 1 also comprises an electronic control unit 57 connected to the motors 44 and 56 and configured to:
synchronise and phase the motor 56 of the arm 53 and the motor 44 of the clamp 38 with each other;
selectively control the operation of the motor 44 of the clamp 38 so as to move the shaft 45 with a reciprocating rotary motion around the axis 47;
selectively control the operation of the motor 44 of the clamp 38 and, therefore, the rotation of the jaws 39 according to a diameter of the coil 6; and
selectively control the operation of the motor 44 of the clamp 38 and, therefore, the rotation of the jaws 39 so as to coat the entire coil 6 with a relatively small number of film 3 layers.

The operation of the wrapper machine 1 will now be described from a moment when the coil 6 of pipe 2 is separated from the bar 9 of pipe 2 by the cutting device 22, the containment channel 30 is placed in its forward position, and the gripper jaws 39 of the rotary clamp 38 are placed in their release position.

The vertical slide 24 and the inclined slide 26 of the transfer unit 10 are raised to allow the lower bracket 28 and the rear plate 29 to engage the coil 6, and the horizontal slide 23 of the transfer unit 10 is advanced in the direction 11 to move the coil 6 from the coiling station 5 to the packaging station 7 and into the containment channel 30.

At this point, the gripper jaws 39 of the rotary clamp 38 are moved to their clamping position to hold the coil 6 and the containment channel 30 is moved to its withdrawn position.

Moving the containment channel 30 to its withdrawn position allows the rotating arm 53 of the wrapper assembly 52 to rotate around the axis 55 and wrap the film 3 around the coil 6.

During the wrapping of the film 3 around the coil 6, the coil 6 is intermittently rotated by the clamp 38 around the axis 40 so as to allow the wrapper assembly 52 to wrap the entire coil 6 with the film 3.

The wrapper machine 1 has certain advantages mainly resulting from the fact that the gripper jaws 39 of the rotary clamp 38 are driven by the drive device 43, i.e. by a single drive device, so as to ensure proper synchronisation of the movements of the jaws 39 around the axis 40 and homogeneous wrapping of successive coils 6.

In addition, the electric motor 44 of the drive device 43 enables the electronic control unit 57 to synchronise and phase the motor 56 of the arm 53 and the motor 44 of the clamp 38 with each other in order to:
selectively control the rotation of coil 6 around the axis 40 according to the size of the coil 6 and the number of film 3 layers applied to the coil 6;
guarantee the wrapper machine 1 relatively high productivity and a relatively low film 3 consumption; and
avoid stopping the wrapper machine 1 for setting it up.

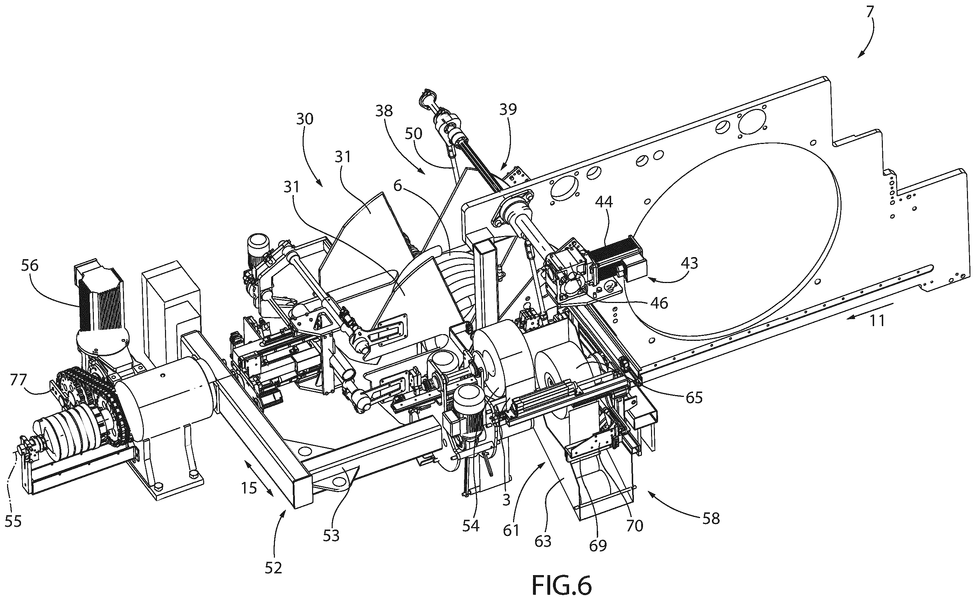

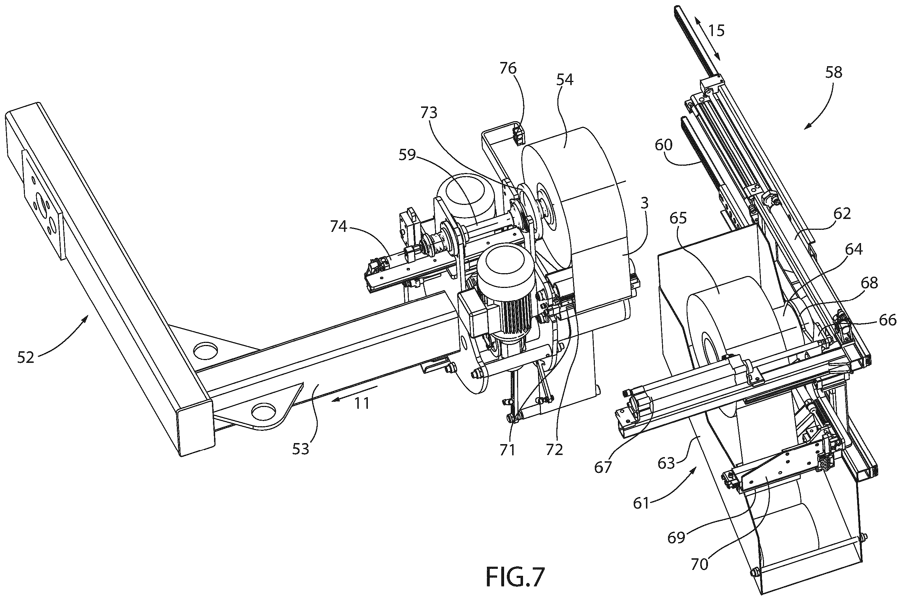

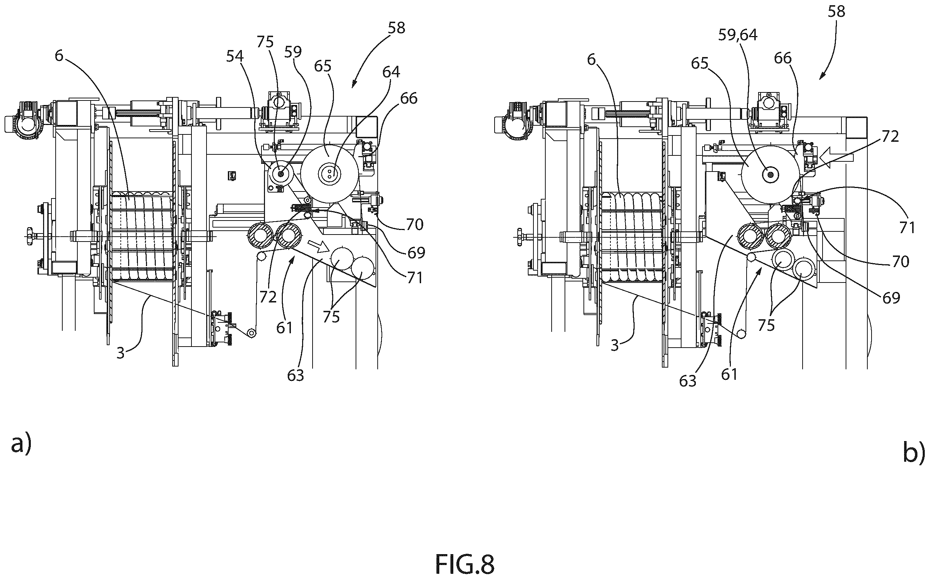

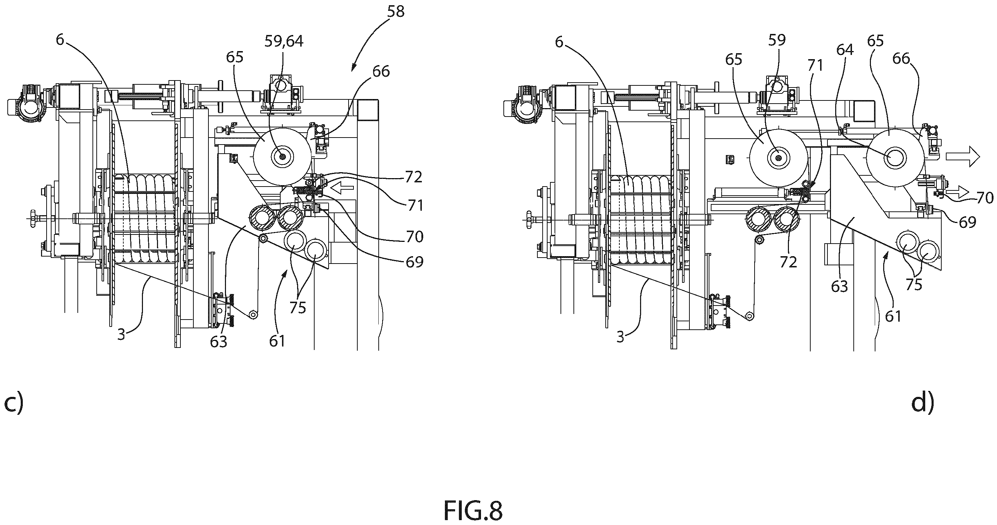

The variant shown in Figures 6, 7, and 8 differs from that illustrated in the preceding figures in that, in it, the wrapper machine 1 further comprises a roll-replacement unit 58 configured to replace the coil 54 mounted on a support shaft 59 protruding from the rotating arm 53 parallel to the direction 11 and axis 55.

The unit 58 comprises a horizontal guide 60 mounted on the base 4 parallel to the direction 15, and a first horizontal slide 61 slidably coupled to the guide 60 to perform, with respect to the base 4 and under the thrust of an actuator cylinder 62 interposed between the base 4 and the slide 61, straight movements in the direction 15.

The slide 61 comprises a boxed body 63, which is cup-shaped with a concavity facing upwards, and is provided with a support shaft 64, which extends in the direction 11, and supports a new coil 65.

The body 63 supports a second horizontal slide 66 slidably coupled to the body 63 to perform, with respect to the body 63 and under the thrust of an actuator cylinder 67 interposed between the slides 61 and 66, straight movements in the direction 11.

The slide 66 is provided with a drive component 68, which extends around the shaft 64, and is movable along the shaft 64 under the thrust of the cylinder 67 to disengage the coil 65 from the shaft 64.

The slide 66 supports a gripper device 69 movable between a gripping position and a release position of an initial flap of the coil 65, and further supports a welding device 70 configured to connect the initial flap of the coil 65 and a final flap of the coil 54 to each other according to operating modes that will be further discussed below.

The rotating arm 53 of the wrapper assembly 52 supports, in addition, a gripper device 71 configured to hold the final flap of the coil 54 by suction; a cutting device 72 to separate the final flap of the coil 54 from the coil 54 itself; and a thrust component 73, which extends around the shaft 59, and is movable along the shaft 59 under the thrust of an actuator cylinder 74 to disengage an inner support cylinder 75 of the coil 54 from the shaft 59.

The operation of the unit 58 will now be described with reference to Figures 6, 7, and 8 and starting from a moment when the slide 61 is moved by the actuator cylinder 62 from a withdrawn position, in which the shaft 64 is aligned with the shaft 59 in the direction 11, to a forward position, in which the coil 65 is loaded onto the shaft 64 by the personnel in charge.

In this regard, it should be noted that the shaft 64 is provided with at least one locking component (not shown) radially movable between a locking position of the coil 65 on the shaft 64 and a release position of the coil 65 from the shaft 64.

The consumption of the film 3 of the coil 54 is controlled by a detection device 76, in particular a sensor, mounted on the arm 53.

Following the exhaustion of the coil 54, the arm 53 and, therefore, the shaft 59 are stopped in a given angular position about the axis 55 in response to a signal from the device 76 and in response to a signal from a detection device 77 of the angular position of the arm 53 about the axis 55, in particular a sensor.

The final flap of the film 3 of the coil 54 is locked and held by suction on the surface of the gripper device 71, and is separated from the coil 54 by the cutting device 72.

The slide 61 is now moved by the cylinder 62 to an intermediate position between the withdrawn position and the forward position so as to allow the cylinder 74 to advance the thrust component 73 along the shaft 59 and to disengage the inner support cylinder 75 of the coil 54 from the shaft 59 and inside the body 63.

The slide 61 is subsequently moved to its withdrawn position so as to align the shafts 59 and 64 with each other in the direction 11 and to allow the cylinder 67 to move the slide 66 in the direction 11, the coil 65 to disengage the shaft 64 and move onto the shaft 59, the gripper devices 69, 71 and welding device 70 to be arranged on the same containment plane perpendicular to the direction 11, and the initial flap of the film 3 of the coil 65, retained by the device 69, to overlap with the final flap of the film 3 of the coil 54, retained by the device 71.

In this regard, it should be noted that the shaft 59 is provided with at least one locking component (not shown) radially movable between a locking position of the coils 54, 65 on the shaft 59 and a release position of the inner support cylinder 75 of the coils 54, 65 from the shaft 59.

At this point, the final flap of the film 3 of the coil 54 and the initial flap of the film 3 of the coil 65 are connected to each other by the welding device 70; the gripper devices 69, 71 are moved to their release positions; and the slide 61 is again moved from its withdrawn position to its forward position to allow the operator to load a new coil 65 onto the shaft 64.

Thus, the unit 58 enables the automatic replacement of the coil 54 mounted on the shaft 59 with a new coil 65. The replacement is carried out during idle times in the production cycle without requiring the wrapper machine 1 to be stopped and limiting the intervention of personnel loading the coils 65 onto the shaft 64.

According to a variant not shown, the slide 61 is eliminated and replaced with a rotating platform configured to support multiple coils 65 distributed along a perimeter edge of the rotating platform and to rotate about an axis of rotation parallel to the direction 11.

## Claims

1. A wrapper machine for packaging flexible articles (2) with an elongated shape, in particular flexible pipes, the wrapper machine comprising a coiling station (5) for forming a coil (6) of a flexible article (2) with an elongated shape; a packaging station (7) for wrapping a stretch film (3) around the coil (6) of flexible article; and a transfer unit (10) for transferring the coil (6) of flexible article from the coiling station (5) to the packaging station (7) in a feeding direction (11), which is transverse to a longitudinal axis (12) of the coil (6) of flexible article; the packaging station (7) comprising, in turn, a wrapper assembly (52) mounted so as to continuously rotate around a first rotation axis (55), which is parallel to the feeding direction (11), and wrap the stretch film (3) around the coil (6) of flexible article, a first support shaft (59) mounted on the wrapper assembly (52) so as to receive and hold a first roll (54) of stretch film and a rotary clamp (38), which is configured to rotate the coil (6) of flexible article around a second rotation axis (40) transverse to the first rotation axis (55); and being **characterized in that** it further comprises a roll-replacement unit (58) comprising, in turn, a store (63), which is provided with at least one second support shaft (64) to receive and hold a second roll (65) of stretch film and is movable between a loading position for loading the second roll (65) of stretch film onto the second support shaft (64) and a transfer position for transferring the second roll (65) of stretch film from the second support shaft (64) to the first support shaft (59); a transfer assembly (66, 68, 73) to disengage an inner support cylinder (75) of the first roll (54) of stretch film from the first support shaft (59) and transfer the second roll (65) of stretch film from the second support shaft (64) to the first support shaft (59); and a joining device (70) to connect a final flap of the first roll (54) of stretch film and an initial flap of the second roll (65) of stretch film to one another.

2. The wrapper machine according to claim 1, wherein the transfer assembly (66, 68, 73) comprises a first transferring device (73) mounted on the wrapper assembly (52) to disengage the inner support cylinder (75) of the first roll (54) of stretch film from the first support shaft (59) and a second transferring device (66, 68) mounted on the store (63) to transfer the second roll (65) of stretch film from the second support shaft (64) to the first support shaft (59).

3. The wrapper machine according to claim 2, wherein the joining device (70) is mounted on the second transferring device (66, 68).

4. The wrapper machine according to claim 2 or 3, wherein the roll-replacement unit (58) further comprises a first gripper device (71) to hold the final flap of the first roll (54) of stretch film and a second gripper device (69) to hold the initial flap of the second roll (65) of stretch film.

5. The wrapper machine according to claim 4, wherein the first gripper device (71) is mounted on the wrapper assembly (52) and the second gripper device (69) is mounted on the second transferring device (66, 68).

6. The wrapper machine according to claim 4 or 5, wherein the second transferring device (66, 68) is movable parallel to a longitudinal axis of the second roll (65) of stretch film between a rest position and an operating position, in which the second roll (65) of stretch film is transferred from the second support shaft (64) to the first support shaft (59) and said first and second gripper devices (71, 69) place themselves in a same containing plane perpendicular to the longitudinal axis of the second roll (65) of stretch film so as to overlap the final flap of the first roll (54) of stretch film and the initial flap of the second roll (65) of stretch film.

7. The wrapper machine according to claim 6, wherein, following the movement of the second transferring device (66, 68) to its operating position, the joining device (70) places itself in said containing plane so as to connect the final flap of the first roll (54) of stretch film and the initial flap of the second roll (65) of stretch film to one another.

8. The wrapper machine according to any one of the preceding claims, wherein the roll-replacement unit (58) further comprises a first detection device (77) to detect the position of the wrapper assembly (52) around the first rotation axis (55).

9. The wrapper machine according to any one of the preceding claims, wherein the roll-replacement unit (58) further comprises a second detection device (76) to detect the consumption of the first roll (54) of stretch film on the first support shaft (59).

10. The wrapper machine according to any one of the preceding claims, wherein the store (63) is movable to an intermediate position arranged between said loading position and said transfer position so as to receive the inner support cylinder (75) of the first roll (54) of stretch film disengaged from the first support shaft (59) by means of the transfer assembly (66, 68, 73).
